# EUROPÄISCHE PATENTANMELDUNG

(11) **EP 2 492 303 A1**
(43) Veröffentlichungstag der Anmeldung: **29.08.2012**
(21) Anmeldenummer: 11001503.9
(22) Anmeldetag: 23.02.2011
(51) Int. Cl.: C08K 3/38, B29C 51/00, F21V 7/22

(54) **Hexagonales Bornitrid enthaltende Polymerzusammensetzung**

(71) Anmelder: Berchtold Holding GmbH, 78532 Tuttlingen (DE); KROH Kunststofftechnik GmbH, 72351 Geislingen (DE)
(72) Erfinder: Reiser, Frank, 72477 Schwenningen (DE); Kroh, Mathias, 72348 Rosenfeld (DE)
(74) Vertreter: Manitz, Finsterwald & Partner GbR

(57) **Zusammenfassung**

Eine Polymerzusammensetzung enthält wenigstens einen Thermoplast und hexagonales Bornitrid, wobei der wenigstens eine Thermoplast aus der Gruppe ausgewählt ist, welche aus Polyphenylsulfonen (PPSU), Polysulfonen (PSU), Polyethersulfonen (PES), Polyphenylensulfiden (PPS), Polyetherimiden (PEI), Polyamidimiden (PAI), Polycarbonaten (PC), Acrylnitril-Butadien-Styrol-Copolymeren (ABS), Polystyrolen (PS), Styrol-Acrylnitril-Copolymeren (SAN), Polyphenylenethern (PPE), Polyamiden (PA), chemischen Modifikationen hiervon und beliebigen Mischungen aus zwei oder mehr der vorstehenden Thermoplaste besteht.

## Beschreibung

Die vorliegende Erfindung betrifft eine Polymerzusammensetzung, welche insbesondere zur Herstellung von in medizinischen Leuchten enthaltenen Formteilen, wie Reflektoren für Operationsleuchten, geeignet ist.

Polymerzusammensetzungen werden für eine Vielzahl von Anwendungen, wie insbesondere zur Herstellung von Kunststoffformteilen, eingesetzt. Dabei sind die Eigenschaften der jeweiligen Polymerzusammensetzung dafür ausschlaggebend, mit welchem Verfahren diese Polymerzusammensetzung zu einem Formteil geformt werden kann. Für viele Formteile, wie beispielsweise für in medizinischen Leuchten, wie Operationsleuchten, enthaltene Reflektoren, ist eine hohe Maßhaltigkeit bei der Herstellung wesentlich, welche beispielsweise durch Spritzgießen erreicht werden kann. Ein Nachteil des Spritzgießens ist es jedoch, dass hierzu sehr teure Werkzeuge erforderlich sind, so dass dieses Verfahren erst ab sehr hohen Stückzahlen wirtschaftlich ist. Als Alternative zu Spitzgussverfahren sind daher Umformverfahren, wie Thermoformverfahren, begehrt, weil bei diesen wesentlich kostengünstigere Werkzeuge als bei dem Spritzgießen eingesetzt werden können.

Damit eine Polymerzusammensetzung durch ein Thermoformverfahren, wie beispielsweise Vakuumverformen, mit einer hohen Maßhaltigkeit zu einem Formteil geformt werden kann, muss diese eine geringe Wärmelängenausdehnung bzw. einen geringen Schrumpf sowie eine hohe Formstabilität aufweisen. Allerdings sind üblicherweise für die vorgenannten Anwendungen eingesetzte Thermoplaste nicht ausreichend formstabil und weisen zudem eine zu hohe Wärmelängenausdehnung auf, um mit der geforderten Maßhaltigkeit durch ein Thermoformverfahren zu höchsten Anforderungen genügenden Kunststoffformteilen geformt zu werden. Dies gilt insbesondere, wenn das Formteil ein kompliziertes Oberflächenprofil und/oder eine geringe Wandstärke aufweist.

Aufgabe der vorliegenden Erfindung ist deshalb die Bereitstellung einer Polymerzusammensetzung, welche eine hinreichend geringe Wärmelängenausdehnung und eine ausreichend hohe Formstabilität aufweist, um durch ein Thermoformverfahren, wie insbesondere durch ein Vakuumverformen, mit einer hohen Maßhaltigkeit zu einem höchsten Anforderungen genügenden Kunststoffformteil geformt werden zu können.

Erfindungsgemäß wird diese Aufgabe durch eine Polymerzusammensetzung gelöst, welche wenigstens einen Thermoplast und hexagonales Bornitrid enthält, wobei der wenigstens eine Thermoplast aus der Gruppe ausgewählt ist, welche aus Polyphenylsulfonen (PPSU), Polysulfonen (PSU), Polyethersulfonen (PES), Polyphenylensulfiden (PPS), Polyetherimiden (PEI), Polyamidimiden (PAI), Polycarbonaten (PC), Acrylnitril-Butadien-Styrol-Copolymeren (ABS), Polystyrolen (PS), Styrol-Acrylnitril-Copolymeren (SAN), Polyphenylenethern (PPE), Polyamiden (PA), chemischen Modifikationen hiervon und beliebigen Mischungen aus zwei oder mehr der vorstehenden Thermoplaste besteht.

Diese Lösung basiert auf der Erkenntnis, dass durch das Vermischen von hexagonalem Bornitrid und einem spezifischen Thermoplast, nämlich einem aus der vorgenannten Gruppe ausgewählten Thermoplast, eine Polymerzusammensetzung erhalten wird, welche nicht nur eine geringe Wärmelängenausdehnung aufweist, sondern sich insbesondere auch durch eine hohe Formstabilität auszeichnet. Bornitrid ist ein wirksames refraktäres Additiv, welches eine sehr hohe thermische und mechanische Beständigkeit aufweist. Aufgrund dieser positiven Eigenschaften eignet sich die erfindungsgemäße Polymerzusammensetzung hervorragend dazu, durch ein Thermoformverfahren, wie insbesondere durch Vakuumverformen, mit einer hohen Maßhaltigkeit zu einem Formteil geformt zu werden, und zwar insbesondere auch zu einem Formteil mit einem komplizierten Oberflächenprofil und/oder mit einer geringen Wandstärke, wie beispielsweise zu einem Reflektor für eine Operationsleuchte.

In Weiterbildung des Erfindungsgedankens wird es vorgeschlagen, dass die erfindungsgemäße Polymerzusammensetzung 1 bis 50 Gew.-%, bevorzugt 5 bis 30 Gew.-% und besonders bevorzugt 10 bis 20 Gew.-% hexagonales Bornitrid enthält. Überraschenderweise wird durch den Zusatz einer vergleichsweise geringen Menge von besonders bevorzugt 10 bis 20 Gew.-% hexagonalem Bornitrid in eine eines der vorgenannten Thermoplaste enthaltende Polymerzusammensetzung eine optimale Ausgewogenheit zwischen minimaler Wärmelängenausdehnung der Polymerzusammensetzung einerseits und hoher Formstabilität der Polymerzusammensetzung andererseits erreicht.

Als hexagonales Bornitrid wird vorzugsweise hochreines kristallines hexagonales Bornitrid eingesetzt. Unter kristallinem hexagonalem Bornitrid wird im Sinne der vorliegenden Erfindung insbesondere hexagonales Bornitrid mit einem Kristallinitätsgrad von wenigstens 80 %, insbesondere bevorzugt von wenigstens 90 %, besonders bevorzugt von wenigstens 95 %, ganz besonders bevorzugt von wenigstens 99 % und höchst bevorzugt von wenigstens 99,9 % verstanden.

Ferner ist es bevorzugt, hexagonales Bornitrid einzusetzen, welches einen mittleren Partikeldurchmesser (d₅₀) von 1 bis 20 µm, besonders bevorzugt von 5 bis 10 µm, ganz besonders bevorzugt von 6 bis 8 µm und höchst bevorzugt von etwa 7 µm aufweist.

Wie vorstehend dargelegt, werden die vorteilhaften Eigenschaften der Polymerzusammensetzung, nämlich eine sehr geringe Wärmelängenausdehnung und eine sehr hohe Formstabilität, dadurch erreicht, dass kristallines hexagonales Bornitrid, vorzugsweise in einer vergleichsweise geringen Menge, mit einem oder mehreren speziellen, aus der vorgenannten Gruppe ausgewählten Thermoplasten vermischt wird. Besonders gute Ergebnisse werden diesbezüglich erhalten, wenn der wenigstens eine Thermoplast ein ABS, ein PC, ein PPSU, ein PSU, ein PPS, eine Mischung aus PA und ABS oder eine Mischung aus PC und ABS ist.

Wenn Mischungen aus zwei verschiedenen Thermoplasten eingesetzt werden, wie beispielsweise eine Mischung aus PA und ABS oder eine Mischung aus PC und ABS, können die beiden Thermoplasten in der Polymerzusammensetzung, bezogen auf den Gesamtpolymergehalt der Polymerzusammensetzung, beispielsweise jeweils in einer Menge von 10 bis 90 Gew.-% enthalten sein. Beispielsweise ist es für eine Mischung aus PC und ABS bevorzugt, wenn die Polymerzusammensetzung, bezogen auf den Gesamtpolymergehalt der Polymerzusammensetzung, 60 bis 85 Gew.-% PC und 40 bis 15 Gew.-% ABS enthält und besonders bevorzugt 70 bis 85 Gew.-% PC und 30 bis 15 Gew.-% ABS enthält.

Grundsätzlich ist die vorliegende Erfindung bezüglich der Menge an in der Polymerzusammensetzung enthaltenem Thermoplast nicht beschränkt. Gute Ergebnisse werden jedoch insbesondere erhalten, wenn die Polymerzusammensetzung 25 bis 99 Gew.-%, bevorzugt 50 bis 95 Gew.-%, besonders bevorzugt 60 bis 90 Gew.-% und ganz besonders bevorzugt 70 bis 85 Gew.-% Thermoplast, welches aus der vorstehenden Gruppe ausgewählt ist, enthält.

Gemäß einer besonders bevorzugten Ausführungsform der vorliegenden Erfindung enthält die Polymerzusammensetzung zusätzlich zu dem wenigstens einen Thermoplast und dem kristallinen hexagonalen Bornitrid wenigstens ein Flammschutzmittel. Dieses Flammschutzmittel wird der Polymerzusammensetzung bevorzugt insbesondere dann zugegeben, wenn der eingesetzte Thermoplast keine inhärente Flammschutzwirkung aufweist. Wenn der eingesetzte Thermoplast jedoch eine inhärente Flammschutzwirkung aufweist, wie dies bei PPSU, PSU, PES, PEI und PAI der Fall ist, kann auf den Zusatz eines Flammschutzmittels verzichtet werden. Allerdings kann auch in diesem Fall der Zusatz von Flammschutzmittel vorteilhaft sein, um die dem Thermoplasten inhärente Flammschutzwirkung zu erhöhen. Vor diesem Hintergrund ist der Zusatz von Flammschutzmittel zu der Polymerzusammensetzung insbesondere dann besonders bevorzugt, wenn diese als Thermoplast PC, ABS, PS, SAN, PPE, PA oder eine Mischung von zwei oder mehr der vorgenannten Thermoplaste, wie eine Mischung aus PA und ABS oder eine Mischung aus PC und ABS, enthält.

Um eine gute Flammschutzwirkung zu erreichen, wird es in Weiterbildung des Erfindungsgedankens vorgeschlagen, dass die Polymerzusammensetzung 4 bis 25 Gew.-% und besonders bevorzugt 5 bis 15 Gew.-% Flammschutzmittel enthält. Als Flammschutzmittel werden nur zusätzlich zu dem Thermoplast und dem kristallinen hexagonalen Bornitrid eingesetzte Flammschutzadditive verstanden, nicht aber der eingesetzte Thermoplast, auch wenn dieser inhärent Flammschutzeigenschaften aufweisen sollte, wie dies beispielsweise bei PPSU der Fall ist.

Als Flammschutzmittel können alle dem Fachmann bekannten Flammschutzmittel eingesetzt werden. Lediglich beispielsweise seien halogenhaltige Flammschutzmittel genannt, wie polybromierte Diphenylether, polybromierte Biphenyle, Tris(chlorethyl)phosphat, Tris(chlorpropyl)phosphat, Tris(dichlorisopropyl)phosphat oder solche, welche auf einer Kombination aus Chlor- und Bromverbindungen mit Antimonoxid basieren. Beispiele für halogenfreie Flammschutzmittel sind solche auf der Basis von Phosphor und Aluminium- und Magnesiumhydroxid. Des Weiteren können als Additive für den Flammschutz Nanocomposite eingesetzt werden.

Eine ganz besonders bevorzugte Polymerzusammensetzung enthält 10 bis 20 Gew.-% kristallines hexagonales Bornitrid, 6 bis 10 Gew.-% eines Flammschutzmittels und 70 bis 84 Gew.-% einer Mischung aus PC und ABS, wobei der Polymeranteil zu 60 bis 85 Gew.-% aus PC und zu 40 bis 15 Gew.-% aus ABS und bevorzugt zu 70 bis 85 Gew.-% aus PC und zu 30 bis 15 Gew.-% aus ABS besteht.

Gemäß einer weiteren bevorzugten Ausführungsform der vorliegenden Erfindung weist die Polymerzusammensetzung einen gemäß der DIN 53752 bzw. der Nachfolgerversion DIN EN ISO 11359-2 gemessenen Wärmelängenausdehnungskoeffizienten von 3.10⁻⁵ bis 5.10⁻⁵ auf.

Ferner ist es bevorzugt, wenn die erfindungsgemäße Polymerzusammensetzung einen nach dem Thermoumformen gemessenen Schrumpf von maximal 1 %, bevorzugt von maximal 0,5 %, besonders bevorzugt von maximal 0,2 % und höchst bevorzugt von maximal 0,1 % aufweist.

Ein weiterer Gegenstand der vorliegenden Erfindung ist die Verwendung der vorstehend beschriebenen Polymerzusammensetzung zur Herstellung von Leuchtsystemen, beispielsweise zur Verwendung in der Medizintechnik, in der Elektroindustrie, in der Elektronikindustrie, in Schienenverkehrsfahrzeugen oder in Straßenkraftfahrzeugen. Konkrete Anwendungsbeispiele sind beispielsweise Reflektoren für medizinische Leuchten, wie Operationsleuchten, Straßenbeleuchtungen, Scheinwerfersysteme für Busse, Bahnen und Lastkraftfahrzeuge, Kamera- und Leuchtsysteme für den Security-Bereich und die Kosmetikindustrie.

Zudem betrifft die vorliegende Erfindung Formteile, welche aus einer zuvor beschriebenen, erfindungsgemäßen Polymerzusammensetzung vorzugsweise durch Thermoformen, wie Vakuumverformen, gebildet sind. Beispiele für solche Formteile sind insbesondere Leuchtsysteme, wie Reflektoren beispielsweise für eine Operationsleuchte.

Dabei ist es nicht erforderlich, dass die Formteile vollständig aus der Polymerzusammensetzung bestehen. Vielmehr kann das erfindungsgemäße Formteil ein beispielsweise durch Coextrusion hergestellter mehrschichtiger Aufbau sein, bei dem eine oder mehrere dieser Schichten aus der erfindungsgemäßen Polymerzusammensetzung gebildet sind und eine oder mehrere andere Schichten aus einem anderen Material bestehen. Beispielsweise kann das Formteil dreischichtig ausgestaltet sein, wobei die unterste und oberste Schicht aus der erfindungsgemäßen Polymerzusammensetzung gebildet sind und die mittlere Schicht aus einem anderen Material, wie beispielsweise aus Glaskugeln oder aus Glasfasern, besteht.

Um dem Formteil, sofern dies gewünscht wird, einen hohen Reflexionsgrad zu verleihen, wird es in Weiterbildung des Erfindungsgedankens vorgeschlagen, dieses nach dessen Formung zu beschichten, und zwar vorzugsweise mit einer Metallbeschichtung.

Grundsätzlich kann die Metallbeschichtung aus jedem geeigneten Metall oder aus einer Mischung verschiedener Metalle bestehen. Gute Ergebnisse werden beispielsweise erhalten, wenn die Metallbeschichtung aus Chrom, Silber, Gold, Aluminium oder einer Mischung aus zwei oder mehr der vorstehenden Metalle zusammengesetzt ist. Besonders bevorzugt wird Aluminium mit einem Reinheitsgrad von wenigstens 99 % und ganz besonders bevorzugt Aluminium mit einem Reinheitsgrad von wenigstens 99,5 % eingesetzt.

Dabei kann das Aufbringen der Metallbeschichtung durch jedes dem Fachmann bekannte Verfahren erfolgen, wie beispielsweise durch Vakuumbeschichten, durch elektrolytische Verfahren, wie Galvanisieren, oder durch Verchromen. Vorzugsweise weist das so beschichtete Formteil einen Reflexionsgrad von mehr als 85 % auf.

Gemäß einer vorteilhaften Ausgestaltung der vorliegenden Erfindung beträgt die Dicke der Metallbeschichtung vorzugsweise 50 bis 500 nm und besonders bevorzugt 100 bis 200 nm.

Um die Haftung der Metallbeschichtung an dem Formteil zu verbessern, beispielsweise indem Unebenheiten der Formteiloberfläche geglättet werden, kann auf das Formteil vor dem Aufbringen der Metallbeschichtung eine Lackschicht aufgebracht werden.

Schließlich kann auf der Metallbeschichtung außenseitig eine Schutzlackschicht aufgebracht werden, um das Formteil vor Oxidation zu schützen. Gute Ergebnisse werden insbesondere erreicht, wenn die Schutzlackschicht eine Dicke von 50 bis 100 nm aufweist und beispielsweise aus einem Plasmapolymer auf der Basis von Hexamethyldisilazan (HMDS) besteht.

Ein weiterer Gegenstand der vorliegenden Erfindung ist ein Verfahren zum Herstellen eines zuvor beschriebenen Formteils, insbesondere eines Reflektors für eine Operationsleuchte, bei dem eine erfindungsgemäße Polymerzusammensetzung durch Thermoformen zu der gewünschten Gestalt geformt wird.

Bei dem Thermoformen kann es sich beispielsweise um ein Vakuumverformen, Tiefziehen, Twin-Sheet-Verfahren oder Hybrid-Thermoverformen handeln.

Wie zuvor beschrieben, kann nach dem Thermoformen auf den Formkörper eine Metallbeschichtung und optional darauf eine Schutzlackschicht aufgebracht werden.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine schematische Querschnittsansicht einer ein erfindungs-gemäßes Formteil in Form eines Reflektors enthaltenden Ope-rationsleuchte und
- Fig. 2: eine perspektivische Ansicht von unten auf den Hauptreflek-tor der Ausführungsform von Fig. 1.

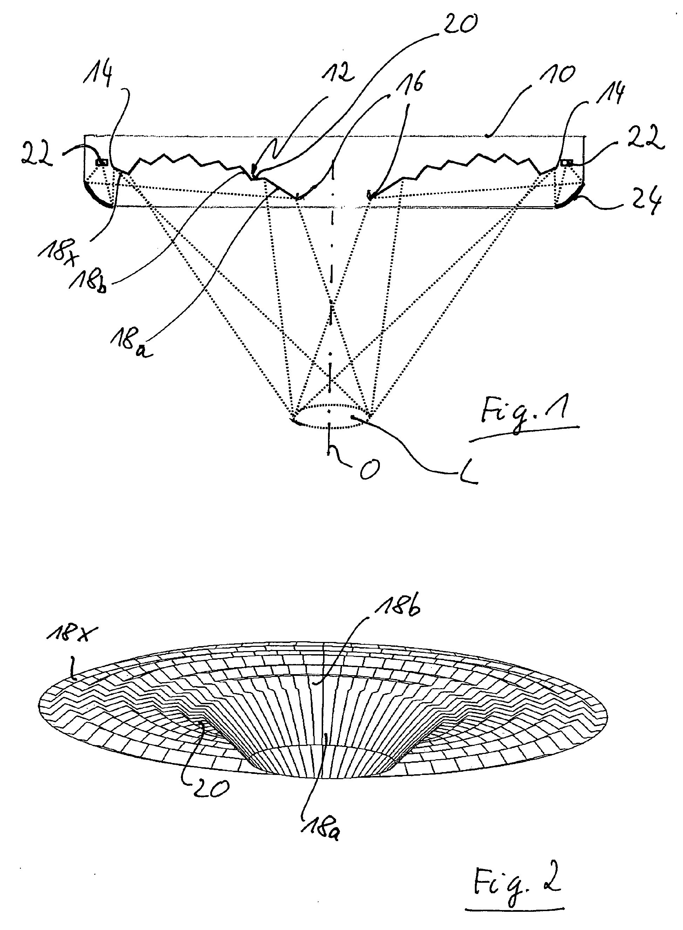

Fig. 1 zeigt eine stark schematische Querschnittsansicht einer Operationsleuchte mit einem scheibenartigen Gehäuse 10, in dem ein zentraler Hauptreflektor 12 angeordnet ist, der eine optische Achse O und einen Außenrand 14 aufweist. Bei dem dargestellten Ausführungsbeispiel ist der Hauptreflektor 12 in seinem zentralen inneren Bereich offen ausgebildet, so dass dieser Hauptreflektor 12 auch einen Innenrand 16 aufweist, der durchströmbar ist, sofern im Bereich des Gehäuses 10 entsprechende Durchströmöffnungen vorgesehen sind.

Der in Fig. 1 dargestellte Hauptreflektor 12 ist - im Gegensatz zu einem Ringreflektor oder Einzelreflektoren - flächig ausgebildet (vgl. Fig. 2) und in eine Vielzahl von Facetten 18a, 18b, ..., 18x unterteilt, wobei der Hauptreflektor als Freiformreflektor ausgebildet ist und die einzelnen Facetten 18a, 18b, ..., 18x stetig oder unstetig ineinander übergehen können. Der Hauptreflektor 12 wurde durch Vakuumverformen einer Polymerzusammensetzung und durch anschließendes Aufbringen einer Metallbeschichtung aus Aluminium mit einer Dicke von 150 nm durch Vakuumbeschichten hergestellt, wobei die Polymerzusammensetzung aus 8 Gew.-% eines halogenfreien Flammschutzmittels, 15 Gew.-% kristallinem hexagonalem Bornitrid und Rest einer Mischung aus, bezogen auf den Polymerbestandteil der Polymerzusammensetzung, 70 Gew.-% PC und 30 Gew.-% ABS zusammengesetzt war.

Um die in den Figuren dargestellte äußerst flache Bauform des Hauptreflektors 12 zu erreichen, ist zwischen zwei entlang der optischen Achse O benachbarten Facetten 18a und 18b ein Abschnitt 20 vorgesehen, der so orientiert ist, dass kein eingestrahltes Licht reflektiert wird. Der Abschnitt 20 trägt somit nicht zur Ausleuchtung des Lichtfelds bei, er ermöglicht jedoch eine flache Bauform des Hauptreflektors 12, da der untere Rand, d.h. der in Richtung des Operationsfelds weisende Rand der Facette 18b, entlang der optischen Achse O in Richtung des Operationsfelds versetzt ist.

Die dargestellte Operationsleuchte weist eine Lichtquelle in Form einer Vielzahl von LEDs 22 auf, die im Bereich des Außenrands 14 des Hauptreflektors 12 ringförmig angeordnet sind und die ihr Licht von dem Außenrand 14 des Hauptreflektors aus in diesen einkoppeln. Bei dem dargestellten Ausführungsbeispiel erfolgt jedoch die Einkopplung des Lichts der LEDs 22 nicht direkt, sondern indirekt über einen ringförmigen Einkoppelreflektor 24, der das von den ringförmig angeordneten LEDs 22 etwa parallel zur optischen Achse O abgestrahlte Licht reflektiert und im Wesentlichen quer zur optischen Achse O lateral in den Hauptreflektor 12 einkoppelt. Hierbei ist die Geometrie des Hauptreflektors 12 so ausgelegt, dass eine Vielzahl von Facetten 18a, 18b, ..., 18x ein und dasselbe Leuchtfeld L beleuchten. Da somit eine Vielzahl von Facetten von einer Vielzahl von LEDs 22 beleuchtet wird, ist das Leuchtfeld L auch dann nicht verschattet, wenn ein Teil des von dem Hauptreflektor 12 abgestrahlten Lichts durch den Operateur verschattet wird.

### Bezugszeichenliste

- 10: Gehäuse
- 12: Hauptreflektor
- 14: Außenrand
- 16: Innenrand
- 18a, 18b, ..., 18x: Facetten
- 20: Abschnitt
- 22: LED
- 24: Einkoppelreflektor
- L: Leuchtfeld
- O: optische Achse

## Patentansprüche

1. Polymerzusammensetzung enthaltend wenigstens einen Thermoplast und hexagonales Bornitrid, wobei der wenigstens eine Thermoplast aus der Gruppe ausgewählt ist, welche aus Polyphenylsulfonen (PPSU), Polysulfonen (PSU), Polyethersulfonen (PES), Polyphenylensulfiden (PPS), Polyetherimiden (PEI), Polyamidimiden (PAI), Polycarbonaten (PC), Acrylnitril-Butadien-Styrol-Copolymeren (ABS), Polystyrolen (PS), Styrol-Acrylnitril-Copolymeren (SAN), Polyphenylenethern (PPE), Polyamiden (PA), chemischen Modifikationen hiervon und beliebigen Mischungen aus zwei oder mehr der vorstehenden Thermoplaste besteht.

2. Polymerzusammensetzung nach Anspruch 1,
**dadurch gekennzeichnet, dass**
diese 1 bis 50 Gew.-%, bevorzugt 5 bis 30 Gew.-% und besonders bevorzugt 10 bis 20 Gew.-% hexagonales Bornitrid enthält.

3. Polymerzusammensetzung nach Anspruch 1 oder 2,
**dadurch gekennzeichnet, dass**
der wenigstens eine Thermoplast ein ABS, ein PC, ein PPSU, ein PSU, ein PPS, eine Mischung aus PA und ABS oder eine Mischung aus PC und ABS ist.

4. Polymerzusammensetzung nach zumindest einem der vorstehenden Ansprüche,
**dadurch gekennzeichnet, dass**
diese 25 bis 99 Gew.-%, bevorzugt 50 bis 95 Gew.-%, besonders bevorzugt 60 bis 90 Gew.-% und ganz besonders bevorzugt 70 bis 85 Gew.-% Thermoplast enthält

5. Polymerzusammensetzung nach zumindest einem der vorstehenden Ansprüche,
**dadurch gekennzeichnet, dass**
diese ferner wenigstens ein Flammschutzmittel enthält, wobei die Menge des Flammschutzmittels, bezogen auf das Gesamtgewicht der Polymerzusammensetzung, bevorzugt 4 bis 25 Gew.-% und besonders bevorzugt 5 bis 15 Gew.-% beträgt.

6. Polymerzusammensetzung nach zumindest einem der vorstehenden Ansprüche,
**dadurch gekennzeichnet, dass**
diese einen gemäß der DIN 53752 gemessenen Wärmelängenausdehnungskoeffizienten von 3.10⁻⁵ bis 5.10⁻⁵ aufweist.

7. Verwendung einer Polymerzusammensetzung nach zumindest einem der vorstehenden Ansprüche zur Herstellung von Leuchtsystemen zum Einsatz in der Medizintechnik, in der Elektroindustrie, in der Elektronikindustrie, in Schienenverkehrsfahrzeugen oder in Straßenkraftfahrzeugen.

8. Formteil, insbesondere Reflektor für eine Operationsleuchte, gebildet aus einer Polymerzusammensetzung nach zumindest einem der Ansprüche 1 bis 6.

9. Formteil nach Anspruch 8,
**dadurch gekennzeichnet, dass**
dieses eine Metallbeschichtung aufweist.

10. Formteil nach Anspruch 9,
**dadurch gekennzeichnet, dass**
die Metallbeschichtung aus Chrom, Silber, Gold, Aluminium oder einer Mischung aus zwei oder mehr der vorstehenden Metalle zusammengesetzt ist.

11. Formteil nach Anspruch 9 oder 10,
**dadurch gekennzeichnet, dass**
die Metallbeschichtung eine Dicke von 50 bis 500 nm und bevorzugt von 100 bis 200 nm aufweist.

12. Formteil nach zumindest einem der Ansprüche 8 bis 11,
**dadurch gekennzeichnet, dass**
dieses eine Schutzlackschicht bevorzugt mit einer Dicke von 50 bis 100 nm aufweist.

13. Verfahren zum Herstellen eines Formteils, insbesondere eines Reflektors für eine Operationsleuchte, nach zumindest einem der Ansprüche 8 bis 12, bei dem eine Polymerzusammensetzung nach zumindest einem der Ansprüche 1 bis 6 durch Thermoformen zu der gewünschten Gestalt geformt wird.

14. Verfahren nach Anspruch 13,
**dadurch gekennzeichnet, dass**
das Thermoformen als Vakuumverformen, Tiefziehen, Twin-Sheet-Verfahren oder Hybrid-Thermoverformen durchgeführt wird.

15. Verfahren nach Anspruch 13 oder 14,
**dadurch gekennzeichnet, dass**
auf den Formkörper nach dem Thermoformverfahren eine Metallbeschichtung und optional darauf eine Schutzlackschicht aufgebracht wird.
